# EUROPÄISCHE PATENTSCHRIFT

(11) **EP 3 521 531 B1**
(45) Veröffentlichungstag und Bekanntmachung des Hinweises auf die Patenterteilung: **18.10.2023**
(21) Anmeldenummer: 18206372.7
(22) Anmeldetag: 15.11.2018
(51) Int. Cl.: E04G 1/14, E04G 9/00, B28B 7/00, E04C 2/00, G06K 19/07, G06K 19/077, G09F 23/00, E04G 5/00

(54) **CODIERTES KONSTRUKTIONSBAUTEIL, INSBESONDERE CODIERTES GERÜSTBAUTEIL ODER CODIERTES SCHALUNGSBAUTEIL SOWIE VERFAHREN ZUR MONTAGE EINES INFORMATIONSTRÄGERS AN EINEM KONSTRUKTIONSBAUTEIL SOWIE INFORMATIONSTRÄGER**
ENCODED CONSTRUCTION COMPONENT, IN PARTICULAR CODED SCAFFOLD COMPONENT OR CODED FORMWORK COMPONENT AND METHOD FOR MOUNTING AN INFORMATION CARRIER TO A CONSTRUCTION COMPONENT AND INFORMATION CARRIER
COMPOSANT DE CONSTRUCTION À CODAGE, EN PARTICULIER COMPOSANT D'ÉCHAFAUDAGE À CODAGE OU COMPOSANT DE COFFRAGE À CODAGE AINSI QUE PROCÉDÉ DE MONTAGE D'UN SUPPORT D'INFORMATIONS SUR UN COMPOSANT DE CONSTRUCTION AINSI QUE SUPPORT D'INFORMATIONS

(30) Priorität: 02.02.2018 DE 102018102411
(43) Veröffentlichungstag der Anmeldung: 07.08.2019
(73) Patentinhaber: ALTRAD plettac assco GmbH, 58840 Plettenberg (DE)
(72) Erfinder: Jurk, Henri, 01968 Sedlitz (DE); Rätzel, Maik, 01983 Großräschen (DE)
(74) Vertreter: Otten, Roth, Dobler & Partner mbB Patentanwälte

(56) Entgegenhaltungen:
- WO-A2-2007/141424
- CH-A1- 701 633
- CN-B- 103 679 256
- DE-A1-102013 111 330
- DE-U1- 20 005 975
- DE-U1-202011 105 270

## Beschreibung

Die Erfindung betrifft ein codiertes Konstruktionsbauteil, insbesondere ein codiertes Gerüstbauteil oder ein codiertes Schalungsbauteil sowie ein Verfahren zur Montage eines Informationsträgers an einem Konstruktionsbauteil gemäß dem Oberbegriff des Anspruchs 1 bzw. 4.

Aus der DE 200 05 975 U1 ist ein auf einer Baustelle verwendbares Schalungs- oder Gerüstteil bekannt, welches mit einem Identifizierungsmerkmal versehen ist, wobei am bzw. im Schalungs- oder Gerüstteil ein Transponder als Träger des Identifizierungsmerkmales angebracht ist.

Weiterhin ist aus der CH 701 633 A1 eine Vorrichtung bekannt, die ein Gehäuse umfasst, das in das Innere eines Metallrohrs eingesetzt ist, sowie einen aktiven Transponder, der in dem Gehäuse untergebracht ist.

Weiterhin ist aus der CN 103 679 256 B ein zugfestes, metallbeständiges, elektronisches RFID-Etikett, sowie ein Herstellungsverfahren bekannt. Hierin werden eine Basis und einen in dieser Basis befestigter RFID-Tag-Mechanismus offenbart.

Weiterhin ist aus der WO 2007/141424 A2 eine Straßensystemvorrichtung bekannt, die eine Straßensystemkomponente umfasst, wobei ein Empfängerport, ein Transponder und ein Verbindungselement vorgesehen sind. Das Verbindungselement umfasst einen Grundkörper, der mit Hauptelementen zum Befestigen des Verbindungselements an der Straßensystemkomponente und einem Transpondergehäuse ausgestattet ist.

Weiterhin ist aus der DE 2011 105 270 U1 eine Befestigungsvorrichtung zur Befestigung eines Transponders, insbesondere eines RFID-Transponders, in einem Profilelement bekannt, wobei in einer Identifikationsseite des Profilelements eine Ausnehmung zur Aufnahme der Befestigungsvorrichtung ausgebildet ist, wobei die Befestigungsvorrichtung so ausgebildet ist, dass sie vollständig in die Ausnehmung einsetzbar ist, wobei die Befestigungsvorrichtung einen Aufnahmeraum zur vollständigen Aufnahme des Transponders aufweist. Diese Befestigungsvorrichtung ist dadurch gekennzeichnet, dass die Befestigungsvorrichtung eine Spanneinrichtung ausbildet, mittels der der Transponder im Aufnahmeraum gehalten werden kann, wobei die Befestigungsvorrichtung einstückig ausgebildet ist.

Weiterhin ist aus der DE 10 2013 111 330 A1 ein Reinigungswerkzeug für ein Bodenreinigungsgerät mit einem Grundkörper bekannt, der einen einer Abnutzung unterliegenden Reinigungsbelag trägt und mit einem Signalgeber, der in Abhängigkeit vom Abnutzungsgrad des Reinigungsbelags ein drahtloses Signal bereitstellt.

Der Erfindung liegt die Aufgabe zugrunde,
- ein codiertes Konstruktionsbauteil, insbesondere ein codiertes Gerüstbauteil oder ein codiertes Schalungsbauteil zu entwickeln, an welchem sich ein die Codierung tragender Informationsträger mit geringem Kraftaufwand und zuverlässig befestigen lässt, bzw.
- ein Verfahren zur Montage eines Informationsträgers an einem Konstruktionsbauteil zu entwickeln, durch welches sich ein eine Codierung tragender Informationsträger mit geringem Kraftaufwand und zuverlässig an dem Konstruktionsbauteil befestigen lässt bzw.

Diese Aufgabe wird ausgehend von den Merkmalen des Oberbegriffs des Anspruchs 1 bzw. 4 durch die kennzeichnenden

Merkmale des Anspruchs 1 bzw. 4 gelöst. In den jeweiligen Unteransprüchen sind vorteilhafte und zweckmäßige Weiterbildungen angegeben.

Bei dem Konstruktionsbauteil ist der Informationsträger durch Anlage seines Mantelkörpers an eine in den Hohlraum weisende Unterseite der Wandung und durch Anlage an einem der Öffnung gegenüberliegenden Boden des Hohlraums an dem Konstruktionsbauteil in dem Hohlraum gehalten. Hierdurch ist der Informationsträger in dem durch die Öffnung zugänglichen Hohlraum in dem Konstruktionsbauteil eingespannt und somit zuverlässig befestigt, das heißt gegen ein Herausfallen aus dem Konstruktionsbauteil gesichert. Weiterhin muss der Informationsträger zur Befestigung an dem Konstruktionsbauteil lediglich in die Öffnung eingesteckt werden. Dies ist mit geringem Kraftaufwand möglich, da der Mantelkörper beim Einstecken nicht vollflächig an dem Konstruktionsbauteil anliegt.

Es ist auch vorgesehen, dass der Informationsträger weiterhin durch Anlage seines Mantelkörpers an dem ringartig umlaufenden Wandungsrand in dem Hohlraum gehalten ist. Hierdurch erfährt der Informationsträger bzw. dessen Mantelkörper eine weitere Abstützung an dem Konstruktionsbauteil, so dass der zuverlässige Halt noch verbessert ist.

Es ist auch vorgesehen, dass der Mantelkörper des Informationsträgers eine Kopffläche, eine Fußfläche und eine zwischen der Kopf- und der Fußfläche ausgebildete Mantelfläche umfasst, wobei an der Mantelfläche wenigstens ein Rastelement ausgebildet ist, mit welchem der Informationsträger in seiner montierten Stellung an der Unterseite der Wandung anliegt. Durch das bzw. die Rastelemente ist eine zuverlässige Anlage des Mantelkörpers an dem Konstruktionsbauteil gewährleistet.

Weiterhin ist es vorgesehen, dass der Mantelkörper des Informationsträgers eine Kopffläche, eine Fußfläche und eine zwischen der Kopf- und der Fußfläche ausgebildete Mantelfläche umfasst, dass an der Mantelfläche und/oder an der Fußfläche wenigstens ein Federelement ausgebildet ist, mit welchem der Informationsträger in seiner montierten Stellung an dem Boden des Hohlraums anliegt, wobei es insbesondere vorgesehen ist, dass das wenigstens eine Federelement in der montierten Stellung unter Vorspannung steht und den Mantelkörper mit wenigstens einem an der Mantelfläche des Informationsträgers ausgebildeten Rastelement gegen die Unterseite der Wandung drückt. Hierdurch wird eine Spannkraft erzeugt, durch welche der Informationsträger sicher zwischen der Unterseite und dem Boden eingeklemmt ist. Weiterhin macht das wenigstens eine Federelement den Informationsträger unempfindlich gegenüber Toleranzen des Konstruktionsbauteils hinsichtlich eines Abstands zwischen der Unterseite und dem Boden, da das Federelement bzw. die Federelemente unter Beibehaltung ihrer Funktion Toleranzen ausgleichen können.

Es ist auch vorgesehen, das wenigstens eine Rastelement und/oder das wenigstens eine Federelement materialeinheitlich und einteilig mit dem Mantelkörper auszubilden. Hierdurch lässt sich der Mantelkörper kostengünstig und insbesondere als Spritzgussteil aus Kunststoff herstellen. Dies bringt auch den Vorteil mit, dass das Identifikationsmittel als Einlegeteil umspritzt werden kann, so dass dieser bei der Herstellung des Informationsträgers quasi automatisch montiert wird.

Weiterhin ist es optional vorgesehen, dass der Mantelkörper wenigstens eine Ausnehmung für das wenigstens eine Federelement umfasst, wobei die wenigstens eine Ausnehmung derart auf das wenigstens eine Federelement angepasst ist, dass das wenigstens eine elastische Federelement beim Durchtritt durch die Öffnung zu wenigstens 30% seines Volumens und insbesondere zu wenigstens 70% seine Volumens und vorzugsweise vollständig von der wenigstens einen Ausnehmung aufgenommen ist. Erfindungsgemäß ist vorgesehen, dass der Mantelkörper wenigstens eine Ausnehmung für das wenigstens eine Rastelement umfasst, wobei die wenigstens eine Ausnehmung derart auf das wenigstens eine Rastelement angepasst ist, dass das wenigstens eine elastische Rastelement beim Durchtritt durch die Öffnung zu wenigstens 30% seines Volumens und insbesondere zu wenigstens 70% seine Volumens und vorzugsweise vollständig von der wenigstens einen Ausnehmung aufgenommen ist. Hierdurch ist es möglich, wahlweise das Rastelement bzw. die Rastelemente und optional zusätzlich das Federelement bzw. die Federelemente bei der Montage durch eine eng tolerierte Öffnung zu bewegen, ohne dass diese plastisch verformt werden.

Weiterhin ist es optional vorgesehen, den Mantelkörper als Bolzen auszubilden, wobei der Bolzen quer zu einer Längsachse im Schnitt als ein Kreis oder als ein Oval oder als eine Ellipse oder als ein Vieleck oder als ein Vieleck mit wenigstens einer gebogen verlaufenden Seite ausgebildet ist. Hierdurch ist der Bolzen auf in dem Konstruktionsbauteil vorhandene Öffnungen anpassbar, so dass nach der Montage auch eine vollflächige Anlage des Informationsträgers an dem ringartig umlaufenden Wandungsrand gegeben ist.

Bei dem erfindungsgemäßen Verfahren zur Montage eines Informationsträgers an dem Konstruktionsbauteil zur Herstellung eines erfindungsgemäßen codierten Konstruktionsbauteils, umfasst der Informationsträger ein Identifikationsmittel und einen Mantelkörper, in welchem das Identifikationsmittel aufgenommen ist, wobei der Mantelkörper zylinderartig ausgebildet ist und eine Kopffläche, eine Fußfläche und eine zwischen der Kopffläche und der Fußfläche ausgebildete Mantelfläche umfasst, wobei an der Mantelfläche wenigstens ein Rastelement angeordnet ist und wobei an der Mantelfläche und/oder der Fußfläche wenigstens ein Federelement angeordnet ist, weiterhin umfasst das Konstruktionsbauteil eine Öffnung, wobei die Öffnung in einer Wandung des Konstruktionsbauteils ausgebildet ist und durch einen ringartig umlaufenden Wandungsrand begrenzt ist, wobei die Öffnung in einen Hohlraum führt und wobei der Hohlraum einen der Öffnung gegenüber liegenden Boden umfasst und
das Verfahren die nachfolgend genannten Schritte umfasst:
a) Einstecken des Informationsträgers mit seiner Fußfläche in die Öffnung;
b) Einschieben des Informationsträgers in den Hohlraum;
c) Einpressen des Informationsträgers in den Hohlraum gegen eine Federkraft des wenigstens einen auf dem Boden des Hohlraums anliegenden Federelements derart, dass das wenigstens eine Rastelement durch die Öffnung bis unter eine Unterseite der Wandung gleitet und
d) Loslassen des Informationsträgers, so dass das wenigstens eine Rastelement durch die Kraft des wenigstens einen Federelements gegen die Unterseite der Wandung geschoben wird und mit einem zwischen dem wenigstens einen Rastelement und seiner Kopffläche liegenden Mantelflächenabschnitt seiner Mantelfläche an einem ringartig umlaufenden Wandungsrand der Öffnung anliegt.

Hierdurch lässt sich der Informationsträger in dem durch die Öffnung zugänglichen Hohlraum in dem Konstruktionsbauteil einspannen und somit zuverlässig befestigen, das heißt gegen ein Herausfallen aus dem Konstruktionsbauteil sichern. Weiterhin erlaubt das Verfahren, dass der Informationsträger zur Befestigung an dem Konstruktionsbauteil lediglich in die Öffnung eingesteckt werden muss. Dies ist mit geringem Kraftaufwand möglich, da der Mantelkörper beim Einstecken nicht vollflächig an dem Konstruktionsbauteil anliegt.

Im Sinne der Erfindung wird unter einem Identifikationsmittel jede elektronische Markierung verstanden, welche durch ein Lesegerät ausgelesen werden kann, wobei die elektronische Markierung drahtlos und insbesondere berührungslos insbesondere durch das Lesegerät mit Energie versorgbar ist. Insbesondere werden unter einem Identifikationsmittel im Sinne der Erfindung sogenannte RFID-Tags bzw. Radio-Frequency Identification-Tags und/oder sogenannte NFC-Tag bzw. Near-Field-Communication-Tags verstanden, welche insbesondere als passive Transponder arbeiten.

Weitere Einzelheiten der Erfindung werden in der Zeichnung anhand von schematisch dargestellten Ausführungsbeispielen beschrieben, wobei zur Erhaltung der Übersichtlichkeit auf eine Schraffur geschnittener Flächen verzichtet wurde.

Hierbei zeigt:
- Figur 1a, 1b:: perspektivische Ansichten einer ersten Ausführungsvariante eines Informationsträgers;
- Figur 2a:: eine perspektivische, teilweise aufgeschnittene Darstellung eines Gerüstrahmens, in welchen der in den Figuren 1a, 1b gezeigte Informationsträger an einem ersten Einbauort eingebaut ist;
- Figur 2b, 2c:: Detailansichten des in der Figur 2a gezeigten Gerüstrahmens;
- Figur 3a:: eine perspektivische, teilweise aufgeschnittene Darstellung des aus den Figur 2a bis 2c bekannten Gerüstrahmens, in welchen der in den Figuren 1a, 1b gezeigte Informationsträger an einem zweiten Einbauort eingebaut ist;
- Figur 3b, 3c:: Detailansichten des in der Figur 3a gezeigten Gerüstrahmens;
- Figur 4a, 4b:: perspektivische Ansichten einer zweiten Ausführungsvariante eines Informationsträgers;
- Figur 5a:: eine perspektivische, teilweise aufgeschnittene Darstellung des aus den Figur 2a bis 2c und 3a bis 3c bekannten Gerüstrahmens, in welchen der in den Figur 4a, 4b gezeigte Informationsträger an einem dritten Einbauort eingebaut ist und
- Figur 5b, 5c:: Detailansichten des in der Figur 5a gezeigten Gerüstrahmens.

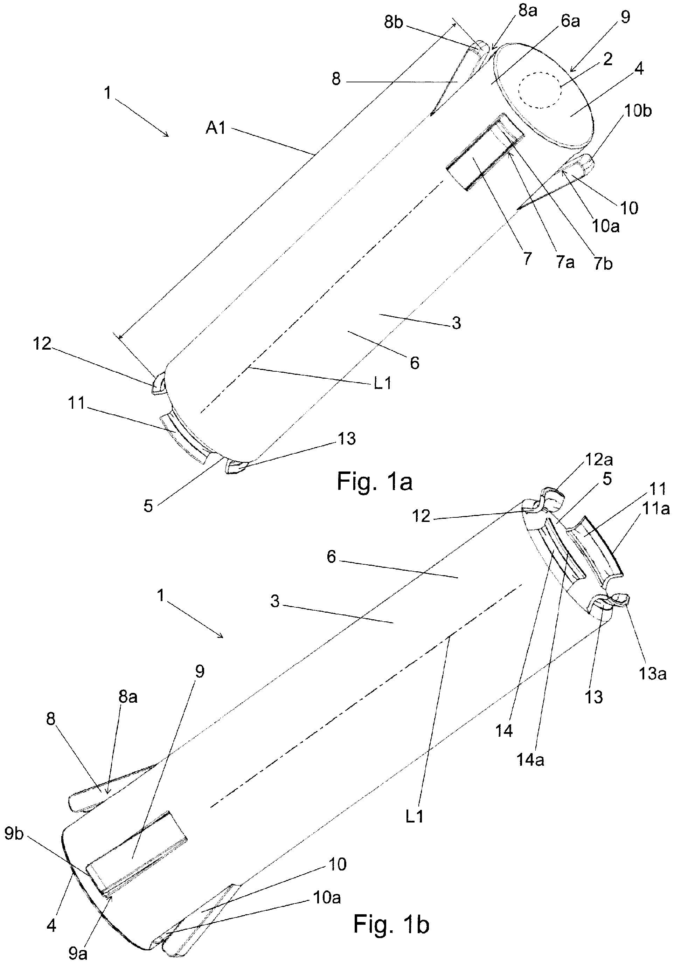

In den Figuren 1a und 1b ist in perspektivischen Ansichten eine erste Ausführungsvariante eines Informationsträgers 1 zur eindeutigen Kennzeichnung bzw. Identifizierung von Konstruktionsbauteilen gezeigt. Der Informationsträger 1 umfasst ein berührungslos auslesbares Identifikationsmittel 2 (nur in Figur 1a dargestellt), welches als NFC-Tag ausgebildet ist, und einen dieses als Gehäuse umgebenden Mantelkörper 3. In dem Identifikationsmittel 2 ist eine Codierung gespeichert, welcher berührungslos durch ein nicht dargestelltes Lesegerät auslesbar ist. Der Mantelkörper 3 des Informationsträgers 1 ist zylinderartig geformt und umfasst eine Kopffläche 4, eine der Kopffläche 4 gegenüber liegende Fußfläche 5 und eine zwischen der Kopffläche 4 und der Fußfläche 5 ausgebildete Mantelfläche 6. An der Mantelfläche 6 sind vier elastische Rastelemente 7, 8, 9 und 10 ausgebildet. Weiterhin sind an der Fußfläche 5 vier Federelement 11, 12, 13 und 14 ausgebildet.

Die Rastelemente 7, 8, 9 und 10 sind derart ausgebildet, dass diese quer zu einer Längsmittelachse L1 des Informationsträgers 1 jeweils zu der Längsmittelachse L1 hin in Einschwenkbereiche bildende Ausnehmungen 7a, 8a, 9a bzw. 10a eindrückbar sind.

Die Federelemente 11, 12, 13 und 14 sind im Querschnitt jeweils C-Förmig ausgebildet und weisen jeweils eine gebogene Kontaktkante 11a, 12a, 13a bzw. 14a auf. Sofern eine Druckkraft in Richtung der Längsmittelachse L1 auf die Kontaktkanten 11a, 12a, 13a bzw. 14a wirkt, federn die Federelemente 11, 12, 13 bzw. 14 in Richtung der Fußfläche 5 ein, wobei diese sich hierbei elastisch verformen.

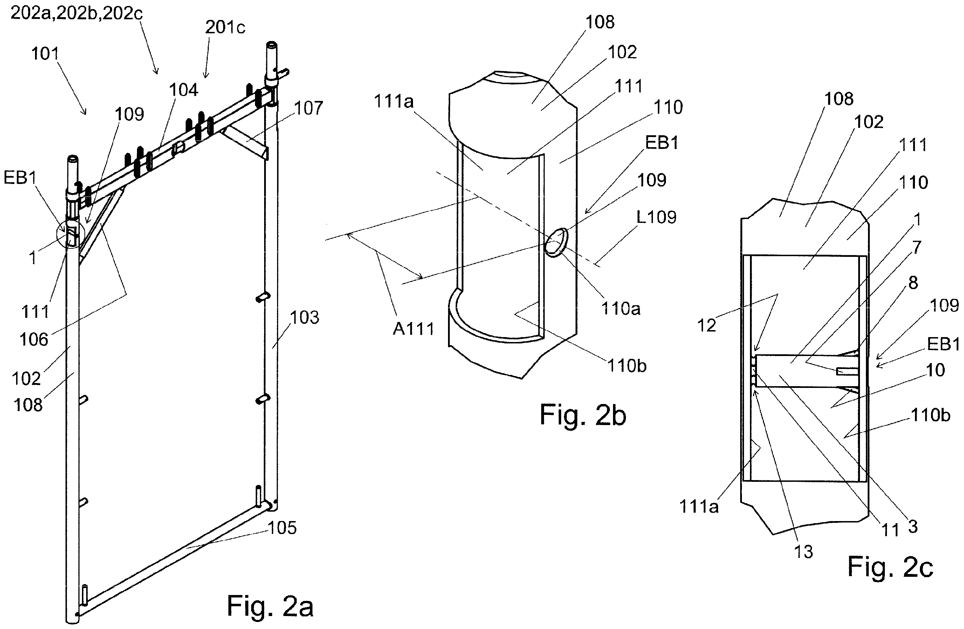

In der Figur 2a ist eine perspektivische und teilweise aufgeschnittene Darstellung eines Gerüstrahmens 101 gezeigt. Der Gerüstrahmen 101 umfasst einen ersten Stiel 102, einen zweiten Stiel 103, einen oberen Querträger 104, einen unteren Querträger 105 sowie eine linke Diagonalstrebe 106 und eine rechte Diagonalstrebe 107. Hierbei verbinden die Querträger 104, 105 die Stiele 102, 103. Weiterhin verbindet die linke Diagonalstrebe 106 den ersten Stiel 102 mit dem oberen Querträger 104 und die rechte Diagonalstrebe 107 den zweiten Stiel 103 mit dem oberen Querträger 104.

Der erste bzw. linke Stiel 102 ist durch eine hohlzylindrisches Profil 108 gebildet, welches zwischen der linken Diagonalstrebe 106 und dem oberen Querträger 104 eine Öffnung 109 (siehe Figur 2b) aufweist, durch welche eine Wandung 110 des Profils 108 zu einem Hohlraum 111 des Profils 108 hin durchbrochen ist, wobei das Profil 108 in diesem Bereich aufgeschnitten dargestellt ist, um den Blick in den Hohlraum 111 frei zu geben. Derartige Öffnungen sind an verzinkten Gerüstrahmen standardmäßig vorhanden. In nicht verzinkte Konstruktionsbauteilen lassen sich einfach entsprechende, in einen Hohlraum des Konstruktionsbauteils führende Bohrungen einbringen. In dem Hohlraum 111 des Profils 108 ist der in den Figuren 1a und 1b gezeigte Informationsträger 1 (siehe auch Figur 2c) angeordnet, so dass der Gerüstrahmen 101 als codierter Gerüstrahmen 202a bzw. als codiertes Gerüstbauteil 202b bzw. als codiertes Konstruktionsbauteil 202c ausgebildet ist. Aus der Detaildarstellung der Figur 2b, welche das Profil 108 im Bereich der Öffnung 109 bei ausgeblendetem Informationsträger zeigt, ist ersichtlich, dass die Öffnung 109 durch einen ringartig umlaufenden Wandungsrand 110a begrenzt ist. In der Figur 2c ist der Bereich vergrößert und in orthogonaler Ansicht gezeigt, wobei in der Figur 2c der Informationsträger 1 dargestellt ist.

Aus einer Zusammenschau der Figuren 2b und 2c ist ersichtlich, dass der Hohlraum 111 durch die Öffnung 109 zugänglich ist. Weiterhin ist ersichtlich, dass der Informationsträger 1 in seiner montierten Stellung, in welcher dieser in den Figuren 2a und 2c gezeigt ist, mit seinem Mantelkörper 3 an einer in den Hohlraum 111 weisende Unterseite 110b der Wandung 110 anliegt und an einem der Öffnung 109 gegenüberliegenden Boden 111a des Hohlraums 111 anliegt und so an dem als Konstruktionsbauteil 201c ausgeführten Gerüstrahmen 101 in dessen Hohlraum 111 gehalten ist. Hierbei haben sich die als Spreizmittel wirkenden Rastelemente 7 bis 10 nach dem Einschieben des Informationsträgers 1 durch die Öffnung 109 wieder so aufgespreizt, dass der Mantelkörper 3 mit freien Enden 7b bis 10b (siehe Figuren 1a, 1b) seiner Rastelemente 7 bis 10 (siehe Figuren 1a, 1b) an der Unterseite 110b der Wandung 110 anliegt. Weiterhin liegt der Informationsträger 1 mit seinen Federelementen 11 bis 14 (siehe Figuren 1a, 1b) an dem Boden 111a des Hohlraums 111 in einem der Öffnung 109 gegenüberliegenden Bereich an. Hierbei ist der Informationsträger 1 derart auf das hohlzylindrische Profil 108 bzw. das hohlzylindrische Profil 108 derart auf den Informationsträger 1 abgestimmt, dass ein parallel zu der Längsachse L1 des Informationsträgers 1 gemessener Abstand A1 (siehe Figur 1a) zwischen den freien Enden 7b bis 10b der Rastelemente 7 bis 10 und den Kontaktkanten 11a bis 14a der Federelemente 11 bis 14 größer ist als ein Abstand A111 (siehe Figur 2b) zwischen der Unterseite 110b der Wandung 110 und dem Boden 111a des Hohlraums 111, wobei der Abstand A111 parallel zu einer Längsmittelachse L109 (siehe Figur 2b) der Öffnung 109 gemessen ist. Hierdurch ist gewährleistet, dass der Informationsträger 1 im montierten Zustand in dem Profil 108 eingeklemmt ist, wobei hierzu die Federelemente 11 bis 14 und/oder die Rastelemente 7 bis 10 elastisch verformt sind.

Eine weitere Absicherung erfährt der Informationsträger 1 in seiner montierten Stellung dadurch, dass der Informationsträger 1 mit seinem Mantelkörper 3 mit einem oberhalb seiner Rastelemente 7 bis 11 und unterhalb seiner Kopffläche 4 ausgebildeten ringartigen Mantelflächenabschnitt 6a (siehe Figur 1a) an dem ringartig umlaufenden Wandungsrand 110a (siehe Figur 2b) manschettenartig anliegt. Hierbei ist die Öffnung 109 in dem Konstruktionsbauteil 201c derart bemessen, dass der Informationsträger 1 mit seinem Mantelkörper 3 derart durch die Öffnung 109 in den Hohlraum 111 einschiebbar ist, dass die Mantelfläche 6 des Mantelkörpers 3 flächig an dem Wandungsrand 110a anliegt. Hierbei werden die Rastelemente 7 bis 10 beim Einschieben in ihre Ausnehmungen 7a bis 10a gedrückt, wenn diese mit dem Wandungsrand 110a in Kontakt kommen. Die Rastelemente 7 bis 10 spreizen sich nach dem Durchtritt durch die Öffnung 109 wieder auf. Die Öffnung 109 und der der Öffnung 109 zugeordnete Hohlraum 111 bilden einen ersten Einbauort EB1 für den Informationsträger 1.

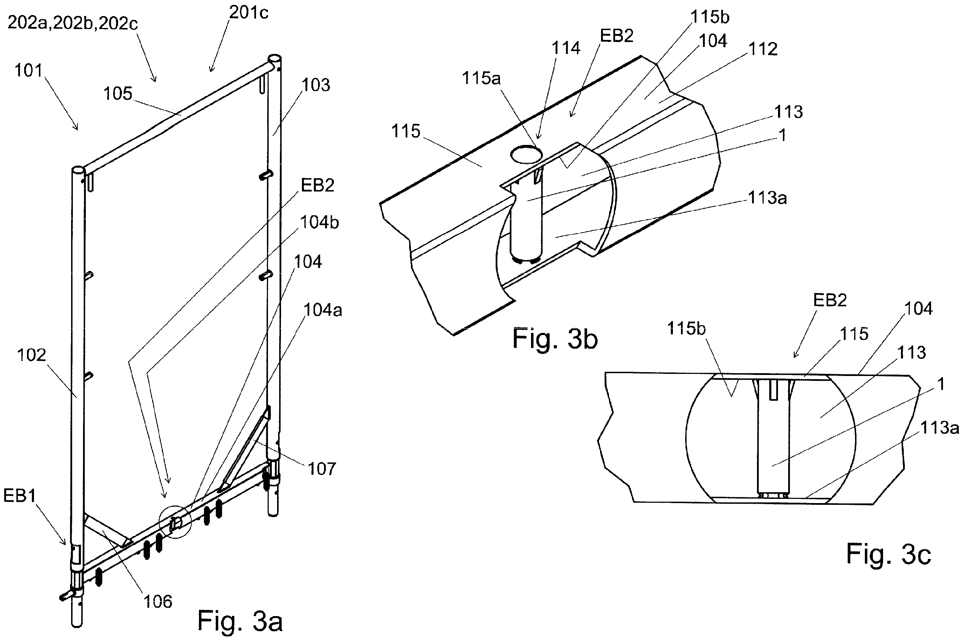

In der Figur 3a ist der aus der Figur 2a bekannte Gerüstrahmen 101 nochmals in perspektivischer Ansicht dargestellt. Entsprechend wird hierzu auch auf die oben stehende Beschreibung zu dem Gerüstrahmen 101 verwiesen. Im Unterscheid zu der Darstellung der Figur 2a ist der Gerüstrahmen 101 in der Figur 3a in einer um 180° gewendeten Stellung gezeigt, in welcher eine Unterseite 104a des oberen Querträgers 104 sichtbar ist. In einem Mittelbereich 104b ist an dem oberen Querträger 104 ein zweiter Einbauort EB2 für den in den Figuren 1a und 1b gezeigten Informationsträger 1 ausgebildet, wobei der obere Querträger 104 in diesem Bereich teilweise aufgeschnitten dargestellt ist.

In Analogie zu den Darstellungen der Figuren 2b und 2c zeigen die Figuren 3b und 3c vergrößerte Ansichten des zweiten Einbauorts EB2, wobei in der Figur 3b der Informationsträger 1 nicht ausgeblendet, sondern dargestellt ist. Der obere Querträger 104 ist als hohles Vierkantprofil 112 ausgebildet, welches einen Hohlraum 113 umfasst, welcher durch eine erste Öffnung 114 zugänglich ist. Der Informationsträger 1 ist an dem zweiten Einbauort EB2 vergleichbar zu seiner Befestigung an dem ersten Einbauort EB1 (siehe Figur 3a) zwischen einer Unterseite 115b einer Wandung 115 des hohlen Vierkantprofils 112 und einem Boden 113a des Hohlraums 113 eingeklemmt und liegt mit seinem Mantelflächenabschnitt 6a (siehe Figur 1a) an einem durch die Öffnung 114 gebildeten ersten Wandungsrand 115a der Wandung 115 an. Somit ist der Informationsträger 1 an dem als Konstruktionsbauteil 201c ausgeführten Gerüstrahmen 101 in dessen Hohlraum 113 gehalten.

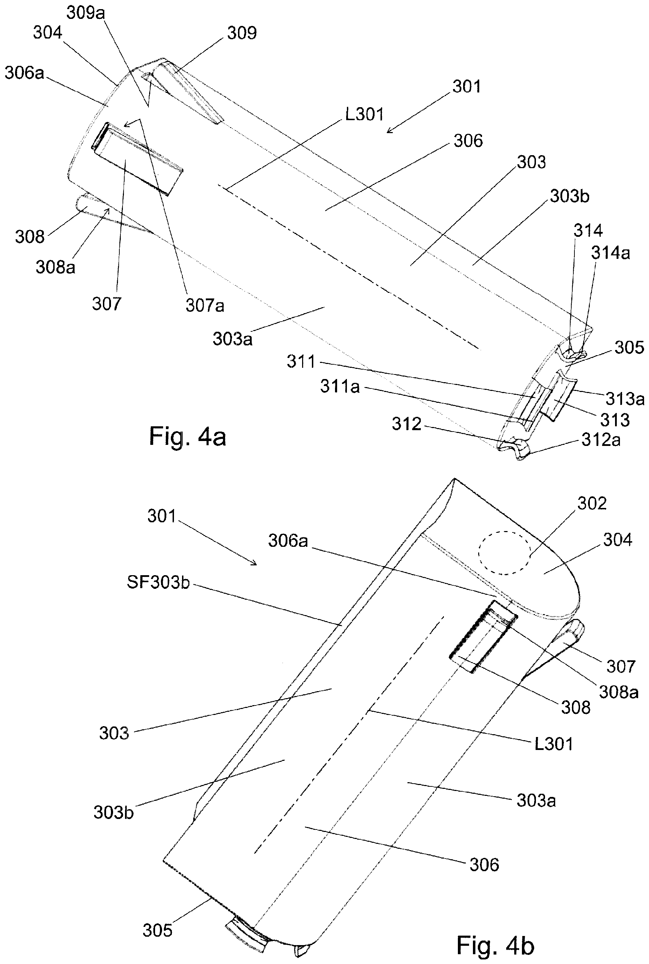

In den Figuren 4a und 4b ist in perspektivischen Ansichten eine zweite Ausführungsvariante eines Informationsträgers 301 gezeigt. Der Informationsträger 301 umfasst ein Identifikationsmittel 302 (nur in Figur 4b gezeigt), welches als NFC-Tag ausgebildet ist, und einen diesen umgebenden Mantelkörper 303. In dem Identifikationsmittel 302 ist eine Codierung gespeichert, welcher berührungslos durch ein nicht dargestelltes Lesegerät auslesbar ist. Der Mantelkörper 303 des Informationsträgers 301 setzt sich geometrisch gesehen aus einem halbzylinderartigen Körper 303a und einen quaderartigen Körper 303b zusammen, wobei der quaderartige Körper 303b dem halbzylinderartigen Körper 303a gegenüberliegend eine gewölbte Seitenfläche SF303b aufweist. Der Mantelkörper 303 umfasst eine Kopffläche 304, eine der Kopffläche 304 gegenüber liegende Fußfläche 305 und eine zwischen der Kopffläche 304 und der Fußfläche 305 ausgebildete Mantelfläche 306. An der Mantelfläche 306 sind drei Rastelemente 307, 308 und 309 ausgebildet. Weiterhin sind an der Fußfläche 305 vier Federelemente 311, 312, 313 und 314 ausgebildet.

Die Rastelemente 307, 308 und 309 sind derart ausgebildet, dass diese quer zu einer Längsmittelachse L301 des Informationsträgers 301 jeweils zu der Längsmittelachse L301 hin in Ausnehmungen 307a, 308a bzw. 309a eindrückbar sind.

Die Federelemente 311, 312, 313 und 314 sind im Querschnitt jeweils C-Förmig ausgebildet und weisen jeweils eine gebogene Kontaktkante 311a, 312a, 313a bzw. 314a auf. Sofern eine Druckkraft in Richtung der Längsmittelachse L301 auf die Kontaktkanten 311a, 312a, 313a bzw. 314a wirkt, federn die Federelemente 311, 312, 313 bzw. 314 in Richtung der Fußfläche 305 ein, wobei sich diese hierbei elastisch verformen.

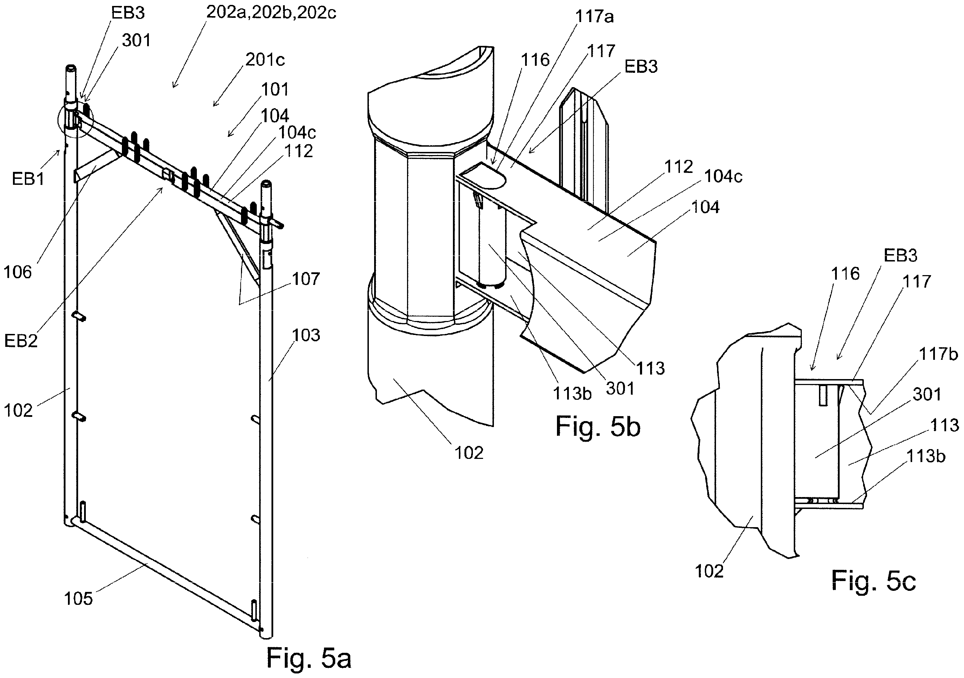

In der Figur 5a ist der aus der Figur 2a bekannte Gerüstrahmen 101 nochmals in perspektivischer Ansicht dargestellt. Entsprechend wird hierzu auch auf die oben stehende Beschreibung verwiesen. Zusätzlich zu dem ersten Einbauort EB1 und dem zweiten Einbauort EB2, welche jeweils zum Einbau der in den Figuren 1a und 1b gezeigten ersten Ausführungsvariante des Informationsträges geeignet sind, ist an einer Oberseite 104c des oberen Querträgers 104 am Übergang zu dem ersten Stiel 102 ein dritter Einbauort EB3 vorgesehen, in welchen die in den Figuren 4a und 4b gezeigte zweite Ausführungsvariante des Informationsträgers 301 (siehe auch Figuren 5b und 5c) eingebaut ist. Der obere Querträger 104 ist in diesem Bereich teilweise aufgeschnitten dargestellt.

In Analogie zu den Darstellungen der Figuren 2b und 2c zeigen die Figuren 5b und 5c vergrößerte Ansichten des dritten Einbauorts EB3, wobei in der Figur 5b der Informationsträger 301 nicht ausgeblendet, sondern dargestellt ist. Der obere Querträger 104 ist wie bereits in der Beschreibung zu der Figur 3a erwähnt als hohles Vierkantprofil 112 ausgebildet, welches den Hohlraum 113 umfasst, welcher durch eine zweite Öffnung 116 zugänglich ist. Der Informationsträger 301 ist an dem dritten Einbauort EB3 in der dargestellten, eingebauten Stellung - vergleichbar zu der Befestigung der ersten Ausführungsvariante des Informationsträgers an dem ersten oder zweiten Einbauort - zwischen einer Unterseite 117b einer Wandung 117 des hohlen Vierkantprofils 112 und einem weiteren Boden 113b des Hohlraums 113 eingeklemmt und liegt mit seinem Mantelflächenabschnitt 306a (siehe Figur 4a, 4b) an einem durch die Öffnung 116 gebildeten zweiten Wandungsrand 117a der Wandung 117 an. Somit ist der Informationsträger 301 an dem als Konstruktionsbauteil 201c ausgeführten Gerüstrahmen 101 in dessen Hohlraum 113 gehalten.

Zur Montage der ersten Ausführungsvariante des Informationsträges 1 oder der zweiten Ausführungsvariante des Informationsträgers 301 ist es vorgesehen,
- zunächst den Informationsträger 1 bzw. 301 mit seiner Fußfläche 5 bzw. 305 in die Öffnung 109 bzw. 114 bzw. 116 einzustecken,
- dann den Informationsträger 1 bzw. 301 in den Hohlraum 111 bzw. 113 einzuschieben,
- nachfolgend den Informationsträger 1 bzw. 301 in den Hohlraum 111 bzw. 113 gegen eine Federkraft des wenigstens einen auf dem Boden 111a bzw. 113a bzw. 113b des Hohlraums 111 bzw. 113 anliegenden Federelements 11 bis 14 bzw. 311 bis 314 derart einzupressen, dass das wenigstens eine Rastelement 7 bis 10 bzw. 307 bis 309 durch die Öffnung 109 bzw. 114 bzw. 116 bis unter eine Unterseite 110b bzw. 115b bzw. 117b der Wandung 110 bzw. 115 bzw. 117 gleitet und
- schließlich den Informationsträger 1 bzw. 301 loszulassen, so dass das wenigstens eine Rastelement 7 bis 10 bzw. 307 bis 309 durch die Kraft des wenigstens einen Federelements 11 bis 14 bzw. 311 bis 314 gegen die Unterseite 110b bzw. 115b bzw. 117b der Wandung 110 bzw. 115 bzw. 117 geschoben wird und mit einem zwischen dem wenigstens einen Rastelement 7 bis 10 bzw. 307 bis 309 und seiner Kopffläche 4 bzw. 304 liegenden Mantelflächenabschnitt 6a bzw. 306a seiner Mantelfläche 6 bzw. 306 an einem ringartig umlaufenden Wandungsrand 110a bzw. 115a bzw. 117a der Öffnung 109 bzw. 114 bzw. 116 anliegt.

Auf diese Weise lässt sich der Informationsträger einfach in einem Hohlraum eines Hohlprofils, welches Bestandteil des Konstruktionsbauteils ist, verankern, so dass nach dem Verankern ein codiertes Konstruktionsbauteil gebildet ist.

Der Informationsträger 1 bzw. 301 ist derart eingebaut, dass dieser mit seiner Kopffläche 4 bzw. 304 gegenüber einer Oberfläche des Profils 108 bzw. des Querträgers 104 bzw. des Konstruktionsbauteils 201c zurück springt - wie dies aus den Figuren 3b und 5b ersichtlich ist - oder bündig mit diesem ausgeführt. Hierdurch können mechanische Belastungen des Informationsträgers weitgehend vermieden werden.

### Bezugszeichenliste:

- 1: Informationsträger
- 2: Identifikationsmittel
- 3: Mantelkörper
- 4: Kopffläche von 3
- 5: Fußfläche von 3
- 6: Mantelfläche von 3
- 6a: Mantelflächenabschnitt
- 7-10: Rastelement von 3
- 7a-10a: Ausnehmung für 7-10
- 7b-10b: freies Ende von 7-10
- 11-14: Federelement von 3
- 11a-14a: Kontaktkante von 11-14

- 101: Gerüstrahmen
- 102: erster, linker Stiel
- 103: zweiter, rechter Stiel
- 104: oberer Querträger
- 104a: Unterseite von 104
- 104b: Mittelbereich von 104
- 104c: Oberseite von 104
- 105: unterer Querträger
- 106: linke Diagonalstrebe
- 107: rechte Diagonalstrebe
- 108: hohlzylindrisches Profil
- 109: Öffnung in 108 bzw. 102
- 110: Wandung von 108
- 110a: Wandungsrand
- 110b: Unterseite von 110
- 111: Hohlraum
- 111a: Boden vom 111
- 112: hohles Vierkantprofil
- 113: Hohlraum von 112
- 113a: Boden von 113
- 113b: weiterer Boden von 113
- 114: Öffnung in 112 bzw. 104
- 115: Wandung von 112
- 115a: erster Wandungsrand
- 115b: Unterseite
- 116: zweite Öffnung in 112 bzw. 104
- 117: weitere Wandung von 112
- 117a: Wandungsrand
- 117b: Unterseite von 117

- 201c: Konstruktionsbauteil
- 202a: codierter Gerüstrahmen
- 202b: codiertes Gerüstbauteil
- 202c: codiertes Konstruktionsbauteil

- 301: Informationsträger
- 302: Identifikationsmittel
- 303: Mantelkörper
- 303a: halbzylinderartiger Körper
- 303b: quaderartiger Körper
- 304: Kopffläche von 303
- 305: Fußfläche von 303
- 306: Mantelfläche von 303
- 306a: Mantelflächenabschnitt
- 307-309: Rastelement von 303
- 307a-309a: Ausnehmung für 307-310
- 307b-309b: freies Ende von 307-310
- 311-314: Federelement von 303
- 311a-314a: Kontaktkante von 311-314

- L1: Längsmittelachse von 1
- L109: Längsmittelachse von 109
- L301: Längsmittelachse von 301
- SF303b: gewölbte Seitenfläche von 303b

- A1: Abstand
- A111: Abstand zwischen 110b und 111a
- EB1: erster Einbauort für 1 an 101
- EB2: zweiter Einbauort für 1 an 101
- EB3: dritter Einbauort für 301 an 101

## Patentansprüche

1. Codiertes Konstruktionsbauteil (202c), insbesondere codiertes Gerüstbauteil (202b) oder codiertes Schalungsbauteil, umfassend
- ein Konstruktionsbauteil (201c), insbesondere ein Gerüstbauteil (201b) oder ein Schalungsbauteil und einen Informationsträger (1; 301),
- wobei der Informationsträger (1; 301) ein Identifikationsmittel (2; 302) und einen diesen umgebenden Mantelkörper (3; 303) umfasst,
- wobei das Konstruktionsbauteil (201c) eine Wandung (110; 115; 117) mit einer durch einen ringartig umlaufenden Wandungsrand (110a; 115a; 117a) begrenzten Öffnung (109; 114; 116) und einen Hohlraum (111; 113) umfasst,
- wobei der Hohlraum (111; 113) durch die Öffnung (109; 114; 116) zugänglich ist,
- wobei der Informationsträger (1; 301) durch Anlage seines Mantelkörpers (3; 303) an eine in den Hohlraum (111; 113) weisende Unterseite (110b; 115b; 117b) der Wandung (110; 115; 117) und durch Anlage an einem der Öffnung (109; 114; 116) gegenüberliegenden Boden (111a; 113a; 113b) des Hohlraums (111; 113) an dem Konstruktionsbauteil (201c) in dem Hohlraum (111; 113) gehalten ist,
- wobei der Informationsträger (1; 301) weiterhin durch Anlage seines Mantelkörpers (3; 303) an dem ringartig umlaufenden Wandungsrand (110a; 115a; 117a) in dem Hohlraum (111; 113) gehalten ist
- wobei, der Mantelkörper (3; 303) des Informationsträgers (1; 301) eine Kopffläche (4; 304), eine Fußfläche (5; 305) und eine zwischen der Kopf- und der Fußfläche (4, 5; 304, 305) ausgebildete Mantelfläche (6; 306) umfasst, wobei an der Mantelfläche (6; 306) wenigstens ein Rastelement (7-10; 307-309) ausgebildet ist, mit welchem der Informationsträger (1; 301) in seiner montierten Stellung an der Unterseite (110b; 115b; 117b) der Wandung (110; 115; 117) anliegt,
- wobei an der Fußfläche (5; 305) wenigstens ein Federelement (11-14; 311-314) ausgebildet ist, mit welchem der Informationsträger (1; 301) in seiner montierten Stellung an dem Boden (111a; 113a; 113b) des Hohlraums (111; 113) anliegt,
- wobei das Federelement (11-14); 311-314) in der montierten Stellung unter Vorspannung steht und den Mantelkörper (3; 303) mit dem Rastelement (7-10; 307-309) gegen die Unterseite (110b; 115b; 117b) der Wandung (110; 115; 117) drückt,
- wobei das wenigstens eine Rastelement (7-10; 307-309) und das wenigstens eine Federelement (11-14; 311-314) materialeinheitlich und einteilig mit dem Mantelkörper (3; 303) ausgebildet ist,
**dadurch gekennzeichnet, dass**
- der Mantelkörper (3; 303) wenigstens eine Ausnehmung (7a-10a; 307a-309a) für das wenigstens eine Rastelement (7-10; 307-309) umfasst,
- wobei die wenigstens eine Ausnehmung (7a-10a; 307a-309a) derart auf das wenigstens eine Rastelement (7-10; 307-309) angepasst ist, dass das wenigstens eine elastische Rastelement (7-10; 307-309) beim Durchtritt durch die Öffnung (109; 114; 116) zu wenigstens 30% seines Volumens und insbesondere zu wenigstens 70% seine Volumens und vorzugsweise vollständig von der wenigstens einen Ausnehmung (7a-10a; 307a-309a) aufgenommen ist.

2. Codiertes Konstruktionsbauteil nach wenigstens einem der vorhergehenden Ansprüche, **dadurch gekennzeichnet,**
- **dass** der Mantelkörper (3; 303) wenigstens eine Ausnehmung für das wenigstens eine Federelement (11-14; 311-314) umfasst, wobei die wenigstens eine Ausnehmung derart auf das wenigstens eine Federelement (11-14; 311-314) angepasst ist, dass das wenigstens eine elastische Federelement (11-14; 311-314) beim Durchtritt durch die Öffnung (109; 114; 116) zu wenigstens 30% seines Volumens und insbesondere zu wenigstens 70% seine Volumens und vorzugsweise vollständig von der wenigstens einen Ausnehmung aufgenommen ist.

3. Codiertes Konstruktionsbauteil nach wenigstens einem der vorhergehenden Ansprüche, **dadurch gekennzeichnet, dass** der Mantelkörper (3; 303) als Bolzen ausgebildet ist, wobei der Bolzen quer zu einer Längsachse (L1) im Schnitt als ein Kreis oder als ein Oval oder als eine Ellipse oder als ein Vieleck oder als ein Vieleck mit wenigstens einer gebogen verlaufenden Seite ausgebildet ist.

4. Verfahren zur Montage eines Informationsträgers (1; 301) an einem Konstruktionsbauteil (201c) zur Herstellung eines codierten Konstruktionsbauteils (202c) nach einem der vorausgehenden Ansprüche,
- wobei der Informationsträger (1; 301) ein Identifikationsmittel (2; 302) und einen Mantelkörper (3; 303) umfasst, in welchem das Identifikationsmittel (2; 302) aufgenommen ist, wobei der Mantelkörper (2; 303) zylinderartig ausgebildet ist und eine Kopffläche (4; 304), eine Fußfläche (5; 305) und eine zwischen der Kopffläche (4; 304) und der Fußfläche (5; 305) ausgebildete Mantelfläche (6; 306) umfasst, wobei an der Mantelfläche (6; 306) wenigstens ein Rastelement (7-10; 307-309) angeordnet ist und wobei an der Mantelfläche (6; 306) und/oder der Fußfläche (5; 305) wenigstens ein Federelement (11-14; 311-314) angeordnet ist,
- wobei das Konstruktionsbauteil (201c) eine Öffnung (109; 114; 116) umfasst, wobei die Öffnung (109; 114; 116) in einer Wandung (110; 115; 117) des Konstruktionsbauteils (201c) ausgebildet ist und durch einen ringartig umlaufenden Wandungsrand (110a; 115a; 117a) begrenzt ist, wobei die Öffnung (109; 114; 116) in einen Hohlraum (111; 113) führt und wobei der Hohlraum (111; 113) einen der Öffnung (109; 114; 116) gegenüber liegenden Boden (111a; 113a; 113b) umfasst und
- wobei das Verfahren die nachfolgend genannten Schritte umfasst:
a) Einstecken des Informationsträgers (1; 301) mit seiner Fußfläche (5; 305) in die Öffnung (109; 114; 116);
b) Einschieben des Informationsträgers (1; 301) in den Hohlraum (111; 113);
c) Einpressen des Informationsträgers (1; 301) in den Hohlraum (111; 113) gegen eine Federkraft des wenigstens einen auf dem Boden (111a; 113a; 113b) des Hohlraums (111; 113) anliegenden Federelements (11-14; 311-314) derart, dass das wenigstens eine Rastelement (7-10; 307-309) durch die Öffnung (109; 114; 116) bis unter eine Unterseite (110b; 115b; 117b) der Wandung (110; 115; 117) gleitet und
d) Loslassen des Informationsträgers (1; 301), so dass das wenigstens eine Rastelement (7-10; 307-309) durch die Kraft des wenigstens einen Federelements (11-14; 311-314) gegen die Unterseite (110b; 115b; 117b) der Wandung (110; 115; 117) geschoben wird und mit einem zwischen dem wenigstens einen Rastelement (7-10; 307-309) und seiner Kopffläche (4; 304) liegenden Mantelflächenabschnitt (6a) seiner Mantelfläche (6; 306) an einem ringartig umlaufenden Wandungsrand (110a; 115a; 117a) der Öffnung (109; 114; 116) anliegt.

## Claims

1. Coded construction component (202c), in particular coded scaffolding component (202b) or coded formwork component, comprising
- a construction component (201c), in particular a scaffolding component (201b) or a formwork component and an information carrier (1; 301),
- wherein the information carrier (1; 301) comprises an identification means (2; 302) and a casing body (3; 303) surrounding the same,
- wherein the construction component (201c) comprises a wall (110; 115; 117) with an opening (109; 114; 116), which is delimited by an annularly encircling wall edge (110a; 115a; 117a), and also comprising a cavity (111; 113),
- wherein the cavity (111; 113) is accessible through the opening (109; 114; 116),
- wherein the information carrier (1; 301) is retained in the cavity (111; 113) on the construction component (201c) by abutment of its casing body (3; 303) against an underside (110b; 115b; 117b) of the wall (110; 115; 117), the underside being oriented into the cavity (111; 113), and by abutment against a base (111a; 113a; 113b) of the cavity (111; 113), the base being located opposite the opening (109; 114; 116),
- wherein the information carrier (1; 301) is also retained in the cavity (111; 113) by abutment of its casing body (3; 303) against the annularly encircling wall edge (110a; 115a; 117a),
- wherein the casing body (3; 303) of the information carrier (1; 301) comprises a head surface (4; 304), a foot surface (5; 305) and a lateral surface (6; 306), which is formed between the head and the foot surfaces (4, 5; 304, 305), wherein the lateral surface (6; 306) has formed on it at least one latching element (7-10; 307-309), by means of which the information carrier (1; 301), in its installed position, butts against the underside (110b; 115b; 117b) of the wall (110; 115; 117),
- wherein the foot surface (5; 305) has formed on it at least one spring element (11-14; 311-314), by means of which the information carrier (1; 301), in its installed position, butts against the base (111a; 113a; 113b) of the cavity (111; 113),
- wherein, in the installed position, the spring element (11-14; 311-314) is subjected to prestressing and pushes the casing body (3; 303), with the latching element (7-10; 307-309), against the underside (110b; 115b; 117b) of the wall (110; 115; 117),
- wherein the at least one latching element (7-10; 307-309) and the at least one spring element (11-14; 311-314) are formed of the same material as, and in one piece with, the casing body (3; 303),
**characterized in that**
- the lateral body (3; 303) comprises at least one aperture (7a-10a; 307a-309a) for the at least one latching element (7-10; 307-309),
- wherein the at least one aperture (7a-10a; 307a-309a) is adapted to the at least one latching element (7-10; 307-309) such that, as the at least one elastic latching element (7-10; 307-309) passes through the opening (109; 114; 116), at least 30% of its volume and in particular at least 70% of its volume, and preferably its entire volume, is received by the at least one aperture (7a-10a; 307a-309a).

2. Coded construction component according to at least one of the preceding claims, **characterized**
- **in that** the casing body (3; 303) comprises at least one aperture for the at least one spring element (11-14; 311-314), wherein the at least one aperture is adapted to the at least one spring element (11-14; 311-314) such that, as the at least one elastic spring element (11-14; 311-314) passes through the opening (109; 114; 116), at least 30% of its volume and in particular at least 70% of its volume, and preferably its entire volume, is received by the at least one aperture.

3. Coded construction component according to at least one of the preceding claims, **characterized in that** the casing body (3; 303) is designed in the form of a bolt, wherein, as seen in section, the bolt is designed, in a direction transverse to a longitudinal axis (L1), in the form of a circle or of an oval or of an ellipse or of a polygon or of a polygon with at least one curved side.

4. Method for installing an information carrier (1; 301) on a construction component (201c) in order to produce a coded construction component (202c) according to one of the preceding claims,
- wherein the information carrier (1; 301) comprises an identification means (2; 302) and a casing body (3; 303), in which the identification means (2; 302) is received, wherein the casing body (2; 303) is of cylindrical design and comprises a head surface (4; 304), a foot surface (5; 305) and a lateral surface (6; 306), which is formed between the head surface (4; 304) and the foot surface (5; 305), wherein at least one latching element (7-10; 307-309) is arranged on the lateral surface (6; 306) and wherein at least one spring element (11-14; 311-314) is arranged on the lateral surface (6; 306) and/or the foot surface (5; 305),
- wherein the construction component (201c) comprises an opening (109; 114; 116), wherein the opening (109; 114; 116) is formed in a wall (110; 115; 117) of the construction component (201c) and is delimited by an annularly encircling wall edge (110a; 115a; 117a), wherein the opening (109; 114; 116) leads into a cavity (111; 113) and wherein the cavity (111; 113) comprises a base (111a; 113a; 113b), which is located opposite the opening (109; 114; 116), and
- wherein the method comprises the steps listed hereinbelow:
a) fitting the information carrier (1; 301), by way of its foot surface (5; 305), into the opening (109; 114; 116);
b) pushing the information carrier (1; 301) into the cavity (111; 113);
c) pressing the information carrier (1; 301) into the cavity (111; 113) counter to a spring force of the at least one spring element (11-14; 311-314), the latter butting against the base (111a; 113a; 113b) of the cavity (111; 113), such that the at least one latching element (7-10; 307-309) slides through the opening (109; 114; 116) to below an underside (110b; 115b; 117b) of the wall (110; 115; 117); and
d) releasing the information carrier (1; 301), so that the at least one latching element (7-10; 307-309) is pushed against the underside (110b; 115b; 117b) of the wall (110; 115; 117) by the force of the at least one spring element (11-14; 311-314) and a lateral-surface portion (6a) of the lateral surface (6; 306), the lateral-surface portion being located between the at least one latching element (7-10; 307-309) and the head surface (4; 304), butts against an annularly encircling wall edge (110a; 115a; 117a) of the opening (109; 114; 116).

## Revendications

1. Composant de construction codé (202c), notamment composant d'ossature codé (202b) ou composant de coffrage codé, comprenant
- un composant de construction (201c), notamment un composant d'ossature (201b) ou un composant de coffrage et un support d'informations (1 ; 301),
- le support d'informations (1 ; 301) comprenant un moyen d'identification (2 ; 302) et un corps d'enveloppe (3 ; 303) entourant celui-ci,
- le composant de construction (201c) comprenant une paroi (110 ; 115 ; 117) avec une ouverture (109 ; 114 ; 116) délimitée par un bord de paroi périphérique annulaire (110a ; 115a ; 117a) et une cavité (111 ; 113),
- la cavité (111 ; 113) étant accessible à travers l'ouverture (109 ; 114 ; 116),
- le support d'informations (1 ; 301) étant maintenu sur le composant de construction (201c) dans la cavité (111 ; 113) par application de son corps d'enveloppe (3 ; 303) sur un côté inférieur (110b ; 115b ; 117b) de la paroi (110 ; 115 ; 117) orienté dans la cavité (111 ; 113)) et par application sur un fond (111a ; 113a ; 113b) de la cavité (111 ; 113) opposé à l'ouverture (109 ; 114 ; 116),
- le support d'informations (1 ; 301) étant en outre maintenu dans la cavité (111 ; 113) par application de son corps d'enveloppe (3 ; 303) sur le bord de paroi périphérique annulaire (110a ; 115a ; 117a),
- le corps d'enveloppe (3 ; 303) du support d'informations (1 ; 301) présentant une surface de tête (4 ; 304), une surface de base (5 ; 305) et une surface enveloppe (6 ; 306) réalisée entre la surface de tête et la surface de base (4, 5 ; 304, 305), au moins un élément d'encliquetage (7-10 ; 307-309) étant réalisé sur la surface d'enveloppe (6 ; 306), avec lequel le support d'informations (1; 301) s'applique dans sa position montée sur le côté inférieur (110b ; 115b ; 117b) de la paroi (110 ; 115 ; 117),
- au moins un élément de ressort (11-14 ; 311-314) étant réalisé sur la surface de base (5 ; 305), avec lequel le support d'informations (1 ; 301) s'applique dans sa position montée sur le fond (111a ; 113a ; 113b) de la cavité (111 ; 113),
- l'élément de ressort (11-14 ; 311-314) étant sous précontrainte dans la position montée et appuyant le corps d'enveloppe (3 ; 303) avec l'élément d'encliquetage (7-10 ; 307-309) contre le côté inférieur (110b ; 115b ; 117b) de la paroi (110 ; 115 ; 117),
- l'au moins un élément d'encliquetage (7-10 ; 307-309) et l'au moins un élément de ressort (11-14 ; 311-314) étant réalisés en un seul matériau et d'un seul tenant avec le corps d'enveloppe (3 ; 303),
**caractérisé en ce que**
- le corps d'enveloppe (3 ; 303) comprend au moins un évidement (7a-10a ; 307a-309a) pour l'au moins un élément d'encliquetage (7-10 ; 307-309),
- l'au moins un évidement (7a-10a ; 307a-309a) étant adapté à l'au moins un élément d'encliquetage (7-10 ; 307-309) de telle sorte que l'au moins un élément d'encliquetage élastique (7-10 ; 307-309), lorsqu'il traverse l'ouverture (109 ; 114 ; 116), est logé à au moins 30 % de son volume et notamment à au moins 70 % de son volume et de préférence entièrement dans l'au moins un évidement (7a-10a ; 307a-309a).

2. Composant de construction codé selon au moins l'une quelconque des revendications précédentes, **caractérisé en ce que**
- le corps d'enveloppe (3 ; 303) comprend au moins un évidement pour l'au moins un élément de ressort (11-14 ; 311-314), l'au moins un évidement étant adapté à l'au moins un élément de ressort (11-14 ; 311-314) de telle sorte que l'au moins un élément de ressort élastique (11-14 ; 311-314), lorsqu'il traverse l'ouverture (109 ; 114 ; 116), est logé à au moins 30 % de son volume et notamment à au moins 70 % de son volume et de préférence entièrement dans l'au moins un évidement.

3. Composant de construction codé selon au moins l'une quelconque des revendications précédentes, **caractérisé en ce que** le corps d'enveloppe (3 ; 303) est réalisé sous forme de boulon, le boulon étant réalisé en coupe transversalement par rapport à un axe longitudinal (L1) sous la forme d'un cercle ou sous la forme d'un ovale ou sous la forme d'une ellipse ou sous la forme d'un polygone ou sous la forme d'un polygone avec au moins un côté s'étendant de manière courbée.

4. Procédé de montage d'un support d'informations (1 ; 301) sur un composant de construction (201c) pour la fabrication d'un composant de construction codé (202c) selon l'une quelconque des revendications précédentes,
- le support d'informations (1 ; 301) comprenant un moyen d'identification (2 ; 302) et un corps d'enveloppe (3 ; 303) dans lequel le moyen d'identification (2 ; 302) est logé, le corps d'enveloppe (2 ; 303) étant réalisé à la manière d'un cylindre et comprenant une surface de tête (4 ; 304), une surface de base (5 ; 305) et une surface d'enveloppe (6 ; 305) réalisée entre la surface de tête (4 ; 304) et la surface de base (5 ; 305), au moins un élément d'encliquetage (7-10 ; 307-309) étant agencé sur la surface d'enveloppe (6 ; 306) et au moins un élément de ressort (11-14 ; 311-314) étant agencé sur la surface d'enveloppe (6 ; 306) et/ou la surface de base (5 ; 305),
- le composant de construction (201c) comprenant une ouverture (109 ; 114 ; 116), l'ouverture (109 ; 114 ; 116) étant réalisée dans une paroi (110 ; 115 ; 117) du composant de construction (201c) et étant délimitée par un bord de paroi périphérique annulaire (110a ; 115a ; 117a), l'ouverture (109 ; 114 ; 116) conduisant dans une cavité (111 ; 113) et la cavité (111 ; 113) comprenant un fond (111a ; 113a ; 113b) opposé à l'ouverture (109 ; 114 ; 116), et
- le procédé comprenant les étapes suivantes :
a) l'enfichage du support d'informations (1 ; 301) avec sa surface de base (5 ; 305) dans l'ouverture (109 ; 114 ; 116) ;
b) l'insertion du support d'informations (1 ; 301) dans la cavité (111 ; 113) ;
c) l'enfoncement du support d'informations (1 ; 301) dans la cavité (111 ; 113) à l'encontre d'une force de ressort de l'au moins un élément de ressort (11-14 ; 311-314) appliqué sur le fond (111 ; 113a ; 113b) de la cavité (111 ; 113) de telle sorte que l'au moins un élément d'encliquetage (7-10 ; 307-309) glisse à travers l'ouverture (109 ; 114 ; 116) jusque sous un côté inférieur (110b ; 115b ; 117b) de la paroi (110 ; 115 ; 117), et
d) le relâchement du support d'informations (1 ; 301), de telle sorte que l'au moins un élément d'encliquetage (7-10 ; 307-309) est poussé contre le côté inférieur (110b ; 115b ; 117b) de la paroi (110 ; 115 ; 117) par la force de l'au moins un élément de ressort (11-14 ; 311-314) et s'applique, par une section de surface d'enveloppe (6a) de sa surface d'enveloppe (6 ; 306) située entre l'au moins un élément d'encliquetage (7-10 ; 307-309) et sa surface de tête (4 ; 304), contre un bord de paroi périphérique annulaire (110a ; 115a ; 117a) de l'ouverture (109 ; 114 ; 116).
